Europäisches Patentamt

European Patent Office

Office européen des brevets

(11) Publication number: **0 108 569**
**B1**

# EUROPEAN PATENT SPECIFICATION

(45) Date of publication of patent specification: **18.03.87**

(21) Application number: **83306579.0**

(22) Date of filing: **28.10.83**

(51) Int. Cl.⁴: **B 25 J 17/00**

(54) **Robot wrist and arm.**

(30) Priority: **02.11.82 US 438432**

(43) Date of publication of application:
**16.05.84 Bulletin 84/20**

(45) Publication of the grant of the patent:
**18.03.87 Bulletin 87/12**

(84) Designated Contracting States:
**DE FR GB IT SE**

(56) References cited:
**DE-A-2 402 829**
**DE-A-3 048 067**
**GB-A-2 116 142**
**US-A-3 826 383**
**US-A-4 068 536**

(73) Proprietor: **WESTINGHOUSE ELECTRIC CORPORATION**
**Westinghouse Building Gateway Center**
**Pittsburgh Pennsylvania 15235 (US)**

(72) Inventor: **Norris, George William**
**151 Sunset Drive**
**Pittsburgh Pennsylvania (US)**
Inventor: **Varley, William Joseph**
**250 Mount Vernon Avenue**
**Export Pennsylvania (US)**
Inventor: **Kobuck, Richard Marion**
**302 Circle Drive**
**Delmont Pennsylvania (US)**
Inventor: **Jacobs, Arthur Franklin**
**463 Canongate Drive**
**Monroeville Pennsylvania (US)**
Inventor: **Ferree, Herbert Edward**
**RD. No. 5, Box 59C**
**Greenburgh Pennsylvania (US)**

(74) Representative: **van Berlyn, Ronald Gilbert**
**23, Centre Heights**
**London, NW3 6JG (GB)** .

Courier Press, Leamington Spa, England.

## Description

The invention pertains generally to the art of manipulator arms in robotics and more particularly to an improved structural arrangement for a multi-axis wrist and its supporting arms.

Multi-axis wrists are well known in the robotics art. One example is found in U.S. Patent 4,068,536 which discloses a wrist of the type which is sometimes called a split-ball type, and in which a first portion of the ball is rotatable about one axis, while a second portion of the ball is rotatable relative to the first portion about another axis, and an end effector carried by the second portion of the ball is rotatable about its axis. The structural arrangement of the wrist of that patent includes an unusual sort of internal bevel gear which is believed to be relatively expensive and difficult to manufacture. Also the geometry of the axes rotates a conical path of the end effector around the axis of the arm, which is considered to result in awkwardness of both the programming and the wrist movement. Further, the structure is such that it does not lend itself to providing for a protected central, so-called service access for passage of power lines internally of the arm and wrist to the end effector.

German Publication DE—A—3.048067 discloses a multimember robotic arm having a wrist with two parts. Movement of the robotic arm and wrist is assisted by means of bevel gears. However the arrangement in the German publication has structural limitations which are overcome by the present invention as described in greater detail hereinafter.

U.S. Patent 3,826,383 discloses automatic handling apparatus provided with a three-axis wrist at the end of the arm and includes relatively conventional bevel gear arrangements in the wrist to provide the multi-axis movement. This arrangement includes several high reduction ratio, reduction gears in the power train to obtain the multi-axis wrist movement including one of the reduction gears in the wrist itself. This added weight of the relatively heavy and expensive reduction gear is considered disadvantageous when it is desired to have a lightweight, relatively high speed wrist. Additionally, the provision of the high reduction ratio of up to 320:1 as stated in the patent, requires the use of high speed motors to obtain a high speed wrist. Further, the structure according to said U.S. patent does not provide for a service access space out to the end effector and, finally, the geometry of the wrist structure does not lend itself to the provision of resolvers located at the wrist portion to obtain the more accurate resolution of positions of the end effector and of the pivotal position of the wrist portion carrying the end effector. Under those conditions in which a high degree of accuracy is considered desirable for the positions of these elements, this accuracy is more easily forthcoming when the measuring of the position is at the positioned part itself, as distinct from measuring at a remote location back in the arm at a point where the power for effecting the positioning begins.

It is the aim of this invention to provide a structural arrangement for a general purpose industrial robotic wrist and arm intended to achieve an optimum balance among the factors of cost, precision, power, speed, compactness, weight, stiffness, appearance, and convenience. It is also intended that the arrangement be adapted to satisfy certain other requirements such as the adaptability to locate resolvers which are necessary for control, and suitability to use existing materials and fabrication techniques.

The invention in its broad form comprises a robotic manipulator having a multimember arm carrying at one end thereof a multi-axis wrist of the type comprising at least first and second parts in which one part of the wrist carries an end effector rotatable about one axis, and said one part of said wrist is rotatable relative to the other part of said wrist about an axis at a right angle to said end effector axis, and a first, radially inner member in said arm is rotatable to cause end-effector rotation, and a second, hollow member in said arm, coaxially disposed about said inner member, and rotatable to cause rotation of said one part of the wrist, a first bevel gear train transmitting rotation of said first inner member to said end effector, said first train including a first bevel gear of one diameter affixed to the end of said first inner member and meshing with a second bevel gear of a second diameter located in said other part of said wrist; and a second bevel gear train transmitting rotation of said second member in said arm to said one part of said wrist, said second train including a third bevel gear of a third diameter affixed to the end of said second member in said arm and meshing with a fourth bevel gear of a fourth, characterized in that said second diameter is greater than said first diameter and said fourth diameter is greater than said third diameter and in that said fourth bevel gear has an inner diameter of its tooth ring larger than an outer diameter of said second bevel gear, and includes a central recess in its tooth face to accommodate said second bevel gear in nested relationship therein, wherein further said first gear train includes in addition to said first bevel gear, a coaxially disposed oppositely directed fifth bevel gear connected for simultaneous rotation with said second bevel gear, both said first and fifth gears having open central portions to define a central hollow space; and wherein a first resolver is mounted on said other part of said wrist and includes an extension means projecting through said central hollow space and is keyed to said one part of said wrist so that said first resolver is adapted to measure the rotation of said one part.

In a preferred embodiment described herein, a structural arrangement is provided for a robotic manipulator having an arm carrying a multi-axis wrist at one end thereof, the wrist being of the type in which one part of the wrist carries an end effector rotatable about one axis, and that one part of the wrist is rotatable relative to the other part of the wrist about an axis at a right angle to the end effector axis, and in which these rotations are effected by first and second coaxial members extending through the arm to the wrist, the structural arrangement including a first bevel gear train for transmitting the rotation of the first coaxial member to the end effector with the first train including a first bevel gear of one diameter affixed to the end of the first coaxial member and meshing with a second bevel gear of a second and greater diameter located in the other part of the wrist, and a second bevel gear train is provided for transmitting the rotation of the second coaxial member in the arm to said one part of the wrist, with the second train including a third bevel gear of a third diameter affixed to the end of the second member in the arm and meshing with a fourth bevel gear of a fourth diameter greater than the third diameter.

Further, in the described preferred embodiment, the fourth bevel gear has an inner diameter of its tooth ring larger than the outer diameter of the second bevel gear and a central recess in its tooth face to accommodate the second bevel gear in a nested relationship therein. Further, in a preferred form for certain applications a third and outer coaxial member extends through the arm to rotate the wrist as a whole through a third axis extending at a right angle to the axis of rotation of the said one part of the wrist.

Additionally, for those applications in which it is considered desirable the structural arrangement is such that the coaxial members including the inner one in the arm are hollow, and the gear trains between the arm and the end effector are hollow to provide a central service access space for transmitting power to control the end effector.

A more detailed understanding of the invention is possible from the following description of a preferred embodiment, given by way of example and to be understood in conjunction with the accompanying drawing in which:

Figure 1 is a side view of an arm and wrist, the former being shown in vertical section with the latter being shown in outline form;

Fig. 2 is a plan view of the arm and wrist of Fig. 1 with the top cover of the arm removed;

Fig. 3 is a vertical sectional view of the wrist;

Fig. 4 is a top plan view of the one part of the wrist carrying the end effector;

Fig. 5 is a bottom plan view of the other part of the wrist; and

Fig. 6 is a fragmentary and enlarged view, partly in section, of a scheme for providing fluid tight joints between two of the hollow members rotatable in different axes.

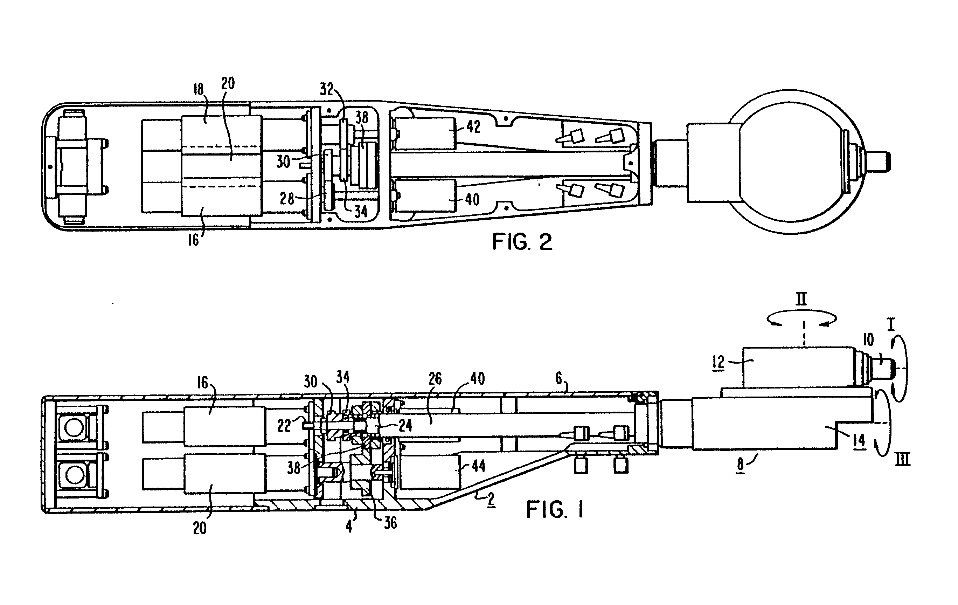

Referring to Fig. 1, the arm generally designated 2 is a generally hollow elongated structure with a base 4 adapted to be seated in a swiveling manner through means not shown upon a structure for providing swinging of the arm. The top cover 6 is removed in Fig. 2 to give the interior view there shown.

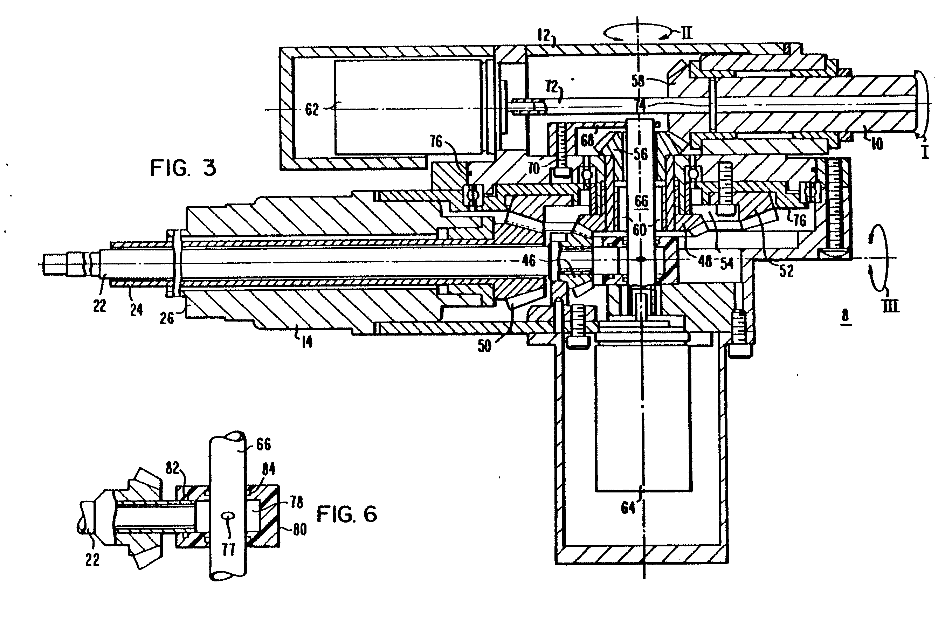

The wrist generally designated 8 at the righthand end of the arm in Figs. 1 and 2 includes as the main elements an end effector 10 which is rotatable about the axis I, and is carried by one part of the wrist, this one part being generally designated 12 and being pivotal about the axis designated II, relative to the other part of the wrist, this other part being generally designated 14 and being rotatable about the axis designated III. Details of the structural arrangement of the wrist will be explained primarily in connection with Fig. 3.

Returning to Figs. 1 and 2, three electric motors 16, 18 and 20, or other suitably powered driving means, are provided to provide the driving force to obtain the multi-axis movement of the wrist and end effector. In the particular arrangement shown in Figs. 1 and 2 these motors are in an inverted triangular relationship as would be seen from an end view. The power to rotate the various parts of the wrist is transmitted through the arm from the motors through a series of three coaxial tubes including a first and radially-inner tube 22, a second and intermediate tube 24 and a third and radially outer tube 26. First tube 22 is driven by motor 16 through spur gears 28 and 30, the latter gear being affixed to the tube. The second and intermediate tube 24 is driven by a motor 18 through a set of spur gears 32 and 34, the latter being comparably affixed to intermediate tube 24. The third and radially outer tube 26 is driven by motor 20 and is rotated through the spur gears 36 and 38.

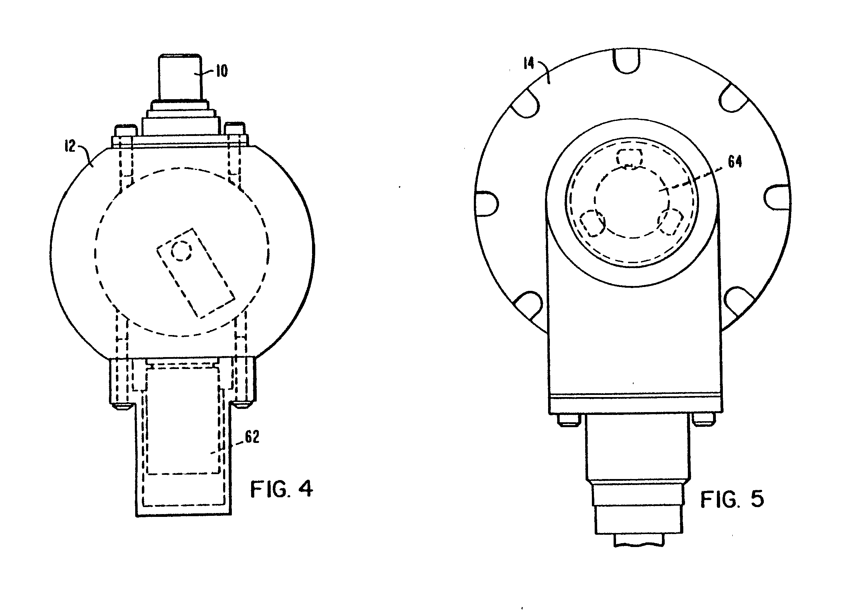

In the Figures 1 and 2 representations, one resolver is associated with each of the force transmitting trains for determining the positioning of each of the elements of the wrist. The three resolvers are identified as 40, 42 and 44 and are coupled for detecting the rotation of the respective motors 16, 18 and 20. It is noted that while placing the resolvers in the arm as shown in Figs. 1 and 2 reduces the space required for the wrist element, it is sometimes desirable, as shown in Figs. 3—5, to locate at least two of the resolvers at the wrist. With the resolvers in the arm as shown in Figs. 1 and 2, there is a slight sacrifice in accuracy in that the resolvers are sensing the movement closer to the point of generation of the force to effect the movement, while if the resolvers are disposed at the wrist, the sensing is of the positioning of the movable elements of the wrist itself. Whether or not the resolvers are located at one place or the other will depend upon the accuracy necessary in the particular application and on whether the extra size of the wrist with the resolvers is objectionable in any given application. In any event, with the structural arrangement of the wrist according to the invention, the provision of two of the resolvers at the wrist can be accommodated nicely.

Referring to Fig. 3, a first bevel gear train for transmitting motion of the first inner member 22 upon its rotation to the end effector 10 includes a first bevel gear 46 affixed to the end of the member 22 and meshing with a second bevel gear 48 which has a greater diameter than that of the first gear 46. In the illustrated form, the ratio of the diameters is approximately 2:1.

The arrangement also includes a second bevel gear train for transmitting motion of the second tube 24 to the one part 12 of the wrist, the second train including a third bevel gear 50 which meshes with a fourth bevel gear 52, the fourth bevel gear having a diameter greater than that of the third bevel gear. In the form illustrated in Fig. 3 that ratio is about 3:1.

As shown in Fig. 3, the inner diameter of the tooth ring of the fourth bevel gear 52 is larger than the outer diameter of the second bevel gear 48, and with the central recess 54 provided in the tooth face of the fourth bevel gear, the second bevel gear 48 is located in generally nested relationship in the recess.

The remainder of the first gear train for transmitting the rotation of the inner tube 22 to the rotation of the end effector 10 includes a fifth bevel gear 56 which meshes with a sixth bevel gear 58 which is connected to the end effector. It will be noted in Fig. 3 that both the second and fifth gears have open central portions which define a central hollow space 60.

In the form of wrist illustrated in Fig. 3—5, the resolvers for the end effector rotation and for the pivoting of the one part 12 are physically located at the wrist. These two resolvers are identified as 62 and 64. Resolver 64 is mounted to the other part 14 of the wrist and is provided with an extension 66 which passes through the central hollow space 60 and has its free end located in the one part 12 of the wrist with a bracket 68 attached both to the end of the extension and through bolt 70 to the structure of the one part so that as the one part 12 pivots about the axis indicated by II, the resolver 64 measures the pivoted position.

The resolver 62 for the end effector 10 is also provided with an extension 72 connected to the end effector 10 through the pin 74.

The break line between the one part 12 and the other part 14 and which permits the one part 12 to pivot about the axis II is indicated by the heavy line 76.

In those applications in which the device carried by the end effector, such as a gripper (not shown) is to be powered internally through the wrist, the hollow inner tube 22, and hollow extension tubes 66 and 72 are used to provide sealed conduits through sealed joint arrangements as shown in Fig. 6. One or more holes 76 are provided in the extension tube 66 and open into an annular chamber 78 formed in the body 80. The open end of the inner member 22 is also in communication with this annular chamber. An O-ring 82 provides a seal between the inner member 22 and the body 80, while a pair of O-rings 84 seal between the tube 66 and the body 80 on opposite sides of the openings 76. Thus both hollow member 22 and extension tube 66 can rotate in their respective axes within the member 80, which remains stationary, and without significant leakage of pneumatic pressure. The same arrangement may be used at the juncture of the tube 66 and the extension tube 72 to pass the pneumatic pressure to the device on the end effector.

In the event the control of the device such as a gripper is to be electrical, there is obviously no requirement for sealing at the relatively movable joints and the wires are simply threaded through the hollow members with means being provided to avoid trimming of the wires due to rotation of the hollow tubes.

The structural arrangement of the arm and wrist according to the invention is intended for use in a light duty, light weight, high speed assembly robot. The arrangement according to the invention is believed to provide a number of features desirable in such a robot. The hollow concentric drive shafts provide relatively high stiffness for the weight, and the bevel gear drives provide the required efficiency to obtain the power, speed and compactness in a good balance. The components are relatively simple and conventional enough to be low in cost and relatively easy to manufacture. The hollow shaft and gearing arrangement provides a conduit for the power and control service lines to the end effectors and resolvers, and space is convenient for mounting two of the resolvers on the wrist when the requirements for high accuracy dictates. In this case the third resolver for measuring the positioning of the wrist in its rotation about the axis III remains in the arm. However, it is noted that rotation of the wrist about this axis is effected by the largest diameter member which accordingly has greater stiffness with respect to twisting of the hollow member, than the smaller diameter hollow members.

The differences in diameter of the meshing bevel gears for both the end effector rotation and one part 12 rotation give a sufficient torque advantage for the purpose of the device and without requiring the use of a large reduction and relatively heavy reduction gear in the wrist area.

The nesting of the bevel gears 48 and 52 results in a relatively flat overall wrist structure which is considered advantageous for some applications.

**Claims**

1. A robotic manipulator having a multimember arm carrying at one end thereof a multi-axis wrist (8) of the type comprising at least first and second parts (12, 14) in which one part of the wrist carries an end effector (10) rotatable about one axis, and said one part of said wrist is rotatable relative to the other part of said wrist about an axis at a right angle to said end effector axis, and a first, radially inner member (22) in said arm is rotatable to cause end-effector (10) rotation, and a second, hollow member in said arm (24), coaxially disposed about said inner member, and rotatable to cause rotation of said one part of the wrist, a first bevel gear train transmitting rotation of said first inner member to said end effector, said first train including a first bevel gear (46) of one diameter affixed to the end of said first inner member and meshing with a second bevel gear (48) of a second diameter located in said other part of said wrist; and a second bevel gear train transmitting rotation of said second member in said arm to said one part of said wrist, said second train including a third bevel gear (50) of a third diameter affixed to the end of said second member in said arm and meshing with a fourth bevel gear (52) of a fourth, characterized in that said second diameter is greater than said first diameter and said fourth diameter is greater than said third diameter and in that said fourth bevel gear (52) has an inner diameter of its tooth ring larger than an outer diameter of said second bevel gear, and includes a central recess in its tooth face to accommodate said second bevel gear in nested relationship therein, wherein further said first gear train includes in addition to said first bevel gear, a coaxially disposed oppositely directed fifth bevel gear connected for simultaneous rotation with said second bevel gear, both said first and fifth gears having open central portions to define a central hollow space; and wherein a first resolver (62) is mounted on said other part of said wrist and includes an extension means (66) projecting through said central hollow space and is keyed to said one part of said wrist so that said first resolver is adapted to measure the rotation of said one part.

2. A manipulator according to claim 1 characterized in that said extension means is hollow.

3. A manipulator according to claim 2 characterized by a second resolver (64) mounted on said one part of said wrist and having second resolver extension means (72) coaxially disposed with the axis of said end effector and being keyed to said end effector so that said second resolver is adapted to measure rotation of said end effector.

4. A manipulator according to claim 1 characterized in that said arm includes first and second motor means (16, 18) in an arm portion remote from the wrist end for rotating, independently of each other, said first inner member and said second hollow member (24), through separate gearing arrangements; and said first and second gear trains in said wrist constitute the entirety of the means to obtain gear reduction between said separate gearing arrangements and the wrist and end effector.

5. A manipulator according to claim 4 characterized by a third hollow member (26) in said arm, coaxially around said first and second members in said arm, and having its wrist end connected to said other part of said wrist to effect rotation of said other part about an axis at a right angle to the pivotal axis of said one part, in accordance with rotation of said third hollow means; and a third motor means (20) in said arm end portion connected to rotate said third hollow member.

6. A manipulator according to claim 5 characterized by a third resolver in said arm connected to measure rotation of said third hollow member.

**Patentansprüche**

1. Ein Robot-Manipulator, bei dem an einem Ende eines mehrgliedrigen Armes ein mehrachsiges Gelenk (8) aus mindestens einem ersten und einem zweiten Teil (12, 14) angeordnet ist, wobei ein Teil des Gelenks ein Endarbeitsteil (10) aufweist, das um eine der Achsen drehbar ist und das eine Teil des Gelenks in Bezug zum anderen Teil des Gelenks um eine Achse drehbar ist, die lotrecht zur Achse des Endarbeitsteils steht, und ein im Arm vorgesehenes erstes drehbares radiales Innenglied (22) die Drehung des Endarbeitsteils (10) bewirkt, ein zweites Hohlglied im Arm (24) koaxial um das Innenglied drehbar angeordnet ist und die Drehung des einen Teils des Gelenks bewirkt, ein erstes Kegelradgetriebe die Drehung des ersten Innengliedes auf das Endarbeitsteil überträgt, das erste Kegelradgetriebe ein erstes Kegelrad (46) mit einem ersten Durchmesser aufweist, das am Ende des ersten Innengliedes angeordnet ist und mit einem zweiten Kegelrad (48) eines zweiten Durchmessers kämmt, das im anderen Teil des Gelenks angeordnet ist; und ein zweites Kegelradgetriebe die Drehung des zweiten Gliedes im Arm auf das eine Teil des Gelenks überträgt, wobei das zweite Getriebe ein drittes Kegelrad (50) eines dritten Durchmessers aufweist, das an einem Ende des zweiten Gliedes des Armes angeordnet ist und mit einem vierten Kegelrad (52) eines vierten Durchmessers kämmt, dadurch gekennzeichnet, daß der zweite Durchmesser größer ist als der erste Durchmesser und der vierte Durchmesser größer ist als der dritte Durchmesser, und daß der Innendurchmesser des Zahnkranzes des vierten Kegelrades (52) größer ist als ein Außendurchmesser des zweiten Kegelrades und in seiner Zahnfläche eine mittige Ausnehmung aufweist, um das zweite Kegelrad eingreifend aufzunehmen, worin ferner das erste Kegelradgetriebe zusätzlich zu dem ersten Kegelrad ein koaxial angeorndetes und entgegengesetzt gerichtetes fünftes Kegelrad aufweist, das mit dem zweiten Kegelrad verbunden ist und gleichzeitig mit diesem dreht, das erste und fünfte Kegelrad offene Mittelbereiche aufweisen, um einen mittigen Hohlraum zu begrenzen; und worin am anderen Teil des Gelenks ein erster Resolver (62) angeordnet ist und einen Ansatz (66) aufweist, der durch den mittigen Hohlraum gesteckt und an dem einen Teil des Gelenks verkeilt ist, derart, daß der erste Resolver die Drehung des einen Teils mißt.

2. Ein Manipulator nach Anspruch 1, dadurch gekennzeichnet, daß der Ansatz hohl ist.

3. Ein Manipulator nach Anspruch 2, dadurch gekennzeichnet, daß an dem einen Teil des Gelenks ein zweiter Resolver (72) vorgesehen und koaxial zur Achse des Endarbeitsteils angeordnet und an diesem verkeilt ist, derart, daß der zweite Resolver die Drehung des Endarbeitsteils mißt.

4. Ein Manipulator nach Anspruch 1, dadurch gekennzeichnet, daß in einem vom Gelenk abgelegenen Teil des Armes ein erster und ein zweiter Motor (16, 18) vorgesehen ist, die Motoren mittels getrennter Getriebeanordnungen das erste Innenglied und das zweite Hohlglied (24) unabhängig voneinander drehen; und das erste und zweite Kegelradgetriebe im Gelenk die Gesamtheit der Anordnung zur Räderuntersetzung zwischen den getrennten Getriebenanordnungen und dem Gelenk und dem Endarbeitsteil bilden.

5. Ein Manipulator nach Anspruch 4, dadurch gekennzeichnet, daß im Arm ein drittes Hohlglied (26) koaxial um das erste und zweite Glied im Arm ·angeordnet und an seinem Gelenkende mit dem anderen Teil des Gelenks verbunden ist, derart, daß es das andere Teil um eine Achse dreht, die im rechten Winkel zur Drehachse des einen Teils angeordnet ist, und zwar entsprechend der Drehung des dritten Hohlgliedes; und ein dritter Motor (20) im Endteil des Armes das dritte Hohlglied dreht.

6. Ein Manipulator nach Anspruch 5, dadurch gekennzeichnet, daß ein dritter Resolver im Arm zur Messung der Drehung des dritten Hohlgliedes vorgesehen ist.

**Revendications**

1. Manipulateur de robot comportant un bras à éléments multiples portant, à l'une de ses extrémités, un poignet à axes multiples (8) du type comprenant au moins une première et une seconde partie (12, 14) dans lesquelles une partie du poignet porte un organe de manoeuvre d'extrémité (10) pouvant tourner autour d'un axe, cette partie du poignet pouvant tourner par rapport à l'autre partie du poignet autour d'un axe perpendiculaire à l'axe de l'organe de manoeuvre d'extrémité, et un premier élément ou élément radialement intérieur (22) du bras pouvant tourner pour produire la rotation de l'organe de manoeuvre d'extrémité (10), et un second élément creux du bras (24), placé coaxialement autour de l'élément intérieur, pouvant tourner de manière à produire la rotation de la première partie du poignet, un premier train d'engrenages coniques transmettant la rotation du premier élément intérieur à l'organe de manoeuvre d'extrémité, ce premier train comprenant un premier engrenage conique (46) d'un premier diamètre, fixé à l'extrémité du premier élément intérieur et venant en prise avec un second engrenage conique (48) d'un second diamètre placé dans l'autre partie du poignet; et un second train d'engrenages coniques transmettant la rotation du second élément du bras à la première partie du poignet, ce second train comprenant un troisième engrenage conique (50) d'un troisième diamètre, fixé à l'extrémité du second élément du bras et venant en prise avec un quatrième engrenage conique (52) d'un quatrième diamètre, manipulateur de robot caractérisé en ce que le second diamètre est supérieur au premier diamètre, en ce que le quatrième diamètre est supérieur au troisième diamètre, en ce que le diamètre intérieur de l'anneau denté du quatrième engrenage conique (52) est plus grand que le diamètre extérieur du second engrenage conique et comprend une cavité centrale ménagée dans sa face dentée pour recevoir et loger le second engrenage conique, en ce qu'en plus du premier engrenage conique, le premier train d'engrenages comprend un cinquième engrenage conique monté coaxialement dans une direction opposée pour tourner simultanément avec le second engrenage conique, le premier et le cinquième engrenage présentant tous les deux des parties centrales ouvertes permettant de former un espace central creux, et en ce qu'un premier organe de résolution (62) est monté sur l'autre partie du poignet et comprend des moyens de prolongement (66) faisant saillie dans l'espace central creux et se verrouillant à la première partie du poignet de façon que ce premier organe de résolution soit adapté à la mesure de la rotation de la première partie.

2. Manipulateur selon la revendication 1, caractérisé en ce que les moyens de prolongement sont creux.

3. Manipulateur selon la revendication 2, caractérisé en ce qu'il comprend un second organe de résolution (64) monté sur la première partie du poignet et comportant des seconds moyens de prolongement d'organe de résolution (72) disposés coaxialement avec l'axe de l'organe de manoeuvre d'extrémité et se verrouillant à cet organe de manoeuvre d'extrémité de façon que le second organe de résolution soit adapté à la mesure de la rotation de l'organe de manoeuvre d'extrémité.

4. Manipulateur selon la revendication 1, caractérisé en ce que le bras comprend un premier et un second dispositif de moteurs (16, 18) placés dans la partie du bras opposée à l'extrémité de poignet, pour faire tourner, indépendamment l'un de l'autre, le premier élément intérieur et le second élément creux (24), par l'intermédiaire de dispositifs d'engrenages séparés, et en ce que le premier et second train d'engrenages du poignet constituent la totalité des moyens permettant d'obtenir la réduction d'engrenage entre les dispositifs d'engrenages séparés et le poignet et l'organe de manoeuvre d'extrémité.

5. Manipulateur selon la revendication 4, caractérisé en ce qu'il comprend un troisième élément creux (26) placé dans le bras coaxialement autour du premier et du second élément du bras, l'extrémité de poignet de ce troisième élément creux étant reliée à l'autre partie du poignet pour produire la rotation de cette autre partie autour d'un axe perpendiculaire à l'axe de pivotement de la première partie, suivant la direction de ce troisième élément creux; et un troisième dispositif de moteur (20) placé dans la partie d'extrémité du bras et monté de manière à faire tourner le troisième élément creux.

6. Manipulateur selon la revendication 5, caractérisé en ce qu'il comprend un troisième organe de résolution placé dans le bras et monté de manière à mesurer la rotation du troisième élément creux.

FIG. 2

FIG. I

FIG. 3

FIG. 6

0 108 569

FIG. 4

FIG. 5

0 108 569